# EUROPEAN PATENT SPECIFICATION

(11) **EP 3 461 380 B1**
(45) Date of publication and mention of the grant of the patent: **08.09.2021**
(21) Application number: 17193849.1
(22) Date of filing: 28.09.2017
(51) Int. Cl.: A47J 31/44

(54) **A BEVERAGE MAKING DEVICE AND METHOD OF ASSEMBLING IT**
GETRÄNKEHERSTELLUNGSVORRICHTUNG UND MONTAGEVERFAHREN DAFÜR
DISPOSITIF DE FABRICATION DE BOISSONS ET SON PROCÉDÉ D'ASSEMBLAGE

(43) Date of publication of application: 03.04.2019
(73) Proprietor: BSH Hausgeräte GmbH, 81739 München (DE)
(72) Inventor: Ogrizek, Bostjan, 3320 Velenje (SI); Golicnik, Matjaz, 3332 Recica (SI); Gnielka, Katja, 81371 München (DE)

(56) References cited:
- US-B1- 6 272 974

## Description

The present invention relates to a beverage maker device, more particularly, the invention concerns improvements in coffee-makers or similar beverage-producing machines, particularly for household applications and to a method of assembling it.

Coffee maker devices are known in the state of the art and are commonly used. Typically, coffee maker device have a body with recess for receiving coffee pot, further comprising bottom portion for supporting coffee pot also for collecting spilled water. Inside the housing is placed brewing system which delivers the water to the heating source and next to the brewing unit. The beverage brewing substance is infused with heated water to produce a beverage which flows out the coffee maker device through the coffee outlet placed above recess for receiving coffee pot. Typically coffee maker is assembled in sequence, wherein each of the portions of the housing forming rigid connection of adjacent portions of said housing. Therefore inner space of the housing is limited by the assembled portions of the housing, moreover, in some cases additional parts are needed to ensure assembling of the said portions of the housing all together.

The document US 5503060A describes a coffeemaker having a housing with a water reservoir, a top cover defining a fill port leading to the reservoir, and a heating chamber below the water reservoir. The housing includes a platform on which a thermal carafe can be placed in readiness for brewing. An automatic drip heater assembly pumps heated water to a brew basket which is removably mounted in brew basket holder pivotally mounted on the housing. The coffeemaker is used with a thermal carafe having a housing which houses an insulated container, preferably a double-walled vacuum bottle. A removable top lid is threadedly connected to the top of the carafe housing and has a gasket which, when the carafe top lid is threaded completely onto the housing, is in heat sealing relation to an opening to the insulated container. A brewed coffee conduit extends through the lid and a lid cover is pivotally mounted on the top of the lid between a closed position in which the lid cover covers the conduit and an open position in which the lid cover exposes the conduit. The coffeemaker and the carafe are constructed to avoid vapor locks which would prevent the brewed coffee from flowing directly into the carafe.

During the process of assembling the housing, suitable portions are rigidly connected together, therefore the size of openings for inserting inner elements are limited because of the need to support said inner elements. Exclusively, some elements used by user (lid, brew basket) are pivotally connected to housing in order to create convenient for user coffee maker device.

Document US 7543526 B1 discloses a coffee maker having a housing having a brewing chamber in which coffee is produced, a water reservoir attached to the housing, a system to pump water from the reservoir, heat the water and then deliver the heated water to the brewing chamber, and an adjustable spout removably and movably secured to the housing for receiving the coffee produced in the brewing chamber wherein the adjustable spout is moveable upward and downward. The coffee maker also has a lid that is moveable attached to the housing. The lid is moveable between a closed position that provides a sealed brewing chamber and an open position that allows access to the coffee pot holder and the coffee pod therein. The coffee maker has a pressure valve that routes excess pressurized water back to the reservoir.

Document US 6272974 B1 discloses a beverage brewing press that includes a brewing vessel defining a chamber having an axis and that is supported by a housing. Positioned within the brewing vessel is a fixed partition and a partition that is movable about the axis relative to the fixed partition. The movable partition includes at least one porous receptacle that encloses a brewable material.

Known coffee makers comprise a housing or portion of the housing including internal elements, for instance: a heater, a pump, etc., that is not disassembled or should not be disassembled by user during normal using of the coffeemaker. The said housing is usually created by sequential and rigidly assembled parts (components) of the housing. Such structure causes inconveniences during assembling process because, after assembling the next part to the housing, the space (size of an opening) for inserting internal elements for instance: the heater, the pump, unfavorable decreases size of openings for inserting next of the said inner system elements, during producing process. Additionally such structure of the housing causes that the housing needs to be divided for a lot of components in order to cover previously placed inside housing said inner elements, what results in increasing production costs.

The objective of the present invention related to beverage maker device, more particularly, to the coffee-makers or similar beverage-producing machines, particularly for household applications, is to provide improvements which can overcome the problem of known coffee makers.

This object is achieved by the technical features described in the characterizing part of the claim 1. Additional technical features and preferred embodiments of the invention are given in the dependent claims.

The foregoing general description and detailed description, given hereafter, are merely exemplary and are understood as additional explanations of the claimed invention. Other advantages and features of the invention result from the following descriptions, drawings and claims.

In accordance with the present invention, there is provided a beverage making device, comprising a housing having: a bottom portion and a front portion fixed to this bottom portion, adapted for accommodating space for a coffee pot. Further, the housing comprises a top portion, a back portion, and a side portions. The front portion and the back portion are bent along its lateral edges. Said bent portions create continuous surface. Inside the housing a beverage producing unit is placed. The front portion has a pair of supporting elements on the horizontal portion of it, provided with slots, and the top portion is disposed with a pair of protrusions, extending downwardly, provided with the sliding element, wherein after mounting the top portion to the front portion, the sliding element slides along the slot, and the said slot with the said sliding element pivotally supporting movement of the top portion with respect the front portion about a rotation axis, wherein movement supporting means is placed outside the rotation axis of the said pivot motion. The positive effect of that is easier assembling each other.

The method of assembling beverage making device, especially the housing assembling comprises: a first step of connecting the front portion to the bottom portion, and a second step of placing the beverage producing unit on the inner side of the bottom portion and the front portion, a third step of fixing the top portion to the front portion by using movement supporting means into a preassembled position, a fourth step of mounting the back portion to the top portion, placing appropriate sealing, a fifth step of compressing the back portion with the top portion by pivotally moving it by the movement supporting means, fixing the back portion to the bottom portion by using the fixing means.

Advantageously, because of connecting two adjacent portions of the housing by movement supporting means, it is possible to achieve pivotally movement of these portions with respect to each other. Therefore said portions could be moved between preassembled when said portions are parted each other or assembled position, when said portions are adhered each other. Said pivotal movement will be guided by the movement supporting means. In preassembled position the sliding element is in the contact with upper end of the slot and said portion connected by the movement supporting means are the most inclined to each other. Therefore there is more space for mounting inner parts of the beverage making device. Further advantage is in that the housing doesn't need additional openings for assembling internal components. All needed internal components are being inserted inside, then pivotally connected portions of the housing are compressed together and fixed by snap or other connection using a fixing means.

In the preferred embodiment a pivotal movement of the portions of the housing with respect to each other is limited by movement supporting means between preassembled and assembled position for easy positioning and connecting said portion by the movement supporting means.

In preferred embodiment of the invention the movement supporting means comprises a slot and an elongated sliding element for easier production by using injection molding technology. In that case the sliding element slides inside the slot and a range of the moment of the sliding element is limited by the length of the slot. Also said solution contributes to easy assembly of said portions. Advantageously present the shape of concentric circular arcs or approximately concentric circular arcs. This geometry of the sliding element and the slot provides possibility of pivotal movement two connected portions of the housing by movement supporting means and the sliding element is guided by the slot. The curvature of said arcs is determined in order to achieve constant contact of ends of two adjacent portions of the housing wherein the rotation axis of the pivotal movement is on or closed to contact point of said portions. The positive effect of that the being in the contact ends of said portion make pivotal movement, without other vertical or horizontal movement making it easier to assembly.

In preferred embodiment the slot is longer than the sliding element. Favorably the ratio between length of the slot and length of the sliding element is about 1.5, wherein the gap between the slot and the sliding element is between 0.1 to 0.5mm, thereby reducing wobbling and providing stable pivotal movement by the movement supporting means is achieved.

Additionally the movement supporting means, because of its geometry and tight fitting the sliding element into the slot, can maintain mutual position for preventing it from falling down because of gravity force.

In another embodiment of the invention an edge of the top portion and an edge of the front portion create a rotation area, supporting mutual movement of said portions of the housing, this is the additional support of the pivotal movement of two adjacent portions of the housing connected by movement supporting means. During the pivotal movement said edges can be in contact, therefore make additional point for supporting pivotal movement of said portions of the housing.

Favorable the top portion is pivotally attached to the front portion by two pairs of the slots and the sliding elements for a movement between the preassembled and the assembled position.

In another preferred embodiment the front portion of the housing comprises a paddle and the top portion comprises a groove and the paddle and the groove are disposed near to the rotation area. In that case the groove provides a guide for the paddle to easier mount these parts tougher and support the pivotal movement of the top portion with respect to the front portion of the housing, in a plane perpendicular to the rotation axis.

Preferably the front portion comprises a series of ribs disposed along a lateral edge of the front portion and cooperate correspondingly with the back portion for easier and firmly connecting these portions of the housing together.

In the preferred embodiment the bottom portion, and the back portion are fixed together by a fixing means disposed on a second end of the back portion with respect to the rotation axis. The fixing means can be in the form of snap connection. The positive aspect of that is fast and firmly assembling the beverage making device.

The present invention solves the problem of providing the beverage making device and method of assembling it with a simple and cheap manner. Individual portions of the housing can be produced in easy and fast way during injection molding process. Pivotally connection of two adjacent portions of the housing increases the inner space for inserting internal components to the housing. Additionally the housing is assembled without screws or with very limited application of screws, therefore assembly of the device is easier and faster.

The construction of the invention, however, together with additional objects and corresponding advantages will be best understood from the following description of specific embodiments and in connection with the accompanying drawings.

Further benefits and advantages of the present invention will become apparent after a careful reading of the detailed description with appropriate reference to the accompanying drawings.

In the drawings:
Fig. 1 shows perspective rear view of beverage making device,
Fig. 2 shows perspective view of a top portion of the housing,
Fig. 3 shows inside portion of a front portion of the housing.
Fig. 4 shows a side view of beverage making device in preassembled position.
Fig. 5 shows cross section of the housing in assembled position.

Beverage making device comprises a water tank placed on side or on the back of a housing, the housing with recess for receiving coffee pot, further comprising bottom portion for supporting coffee pot also for collecting spilled water. Inside the housing is placed brewing system which delivers the water to the heating source and next to the brewing unit. The beverage brewing substance is infused with heated water to produce a beverage which flows out the beverage making device through the coffee outlet placed above recess for receiving coffee pot.

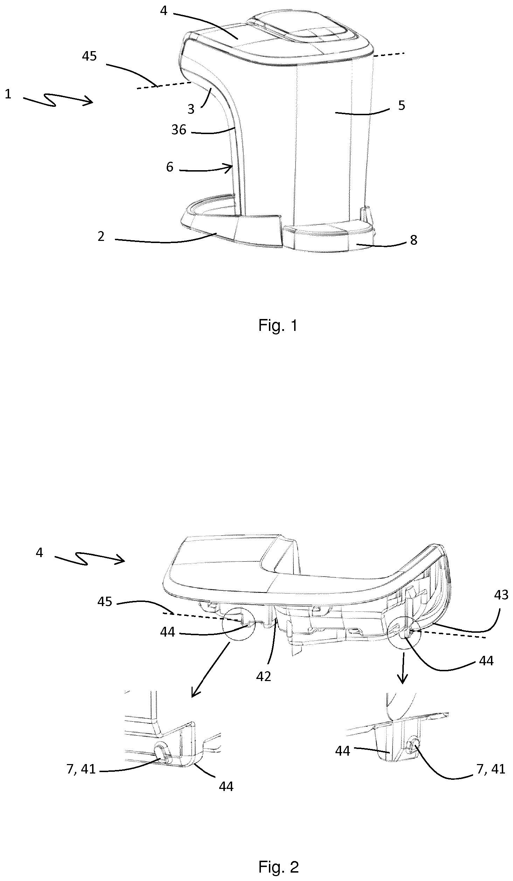

Fig. 1 shows perspective rear view of the completely assembled beverage making device, comprising a bottom portion 2, having a recess for receiving a coffee pot. On the opposite side, a housing 1 is disposed with a fixing means 8, used also for supporting a water tank (not shown on the figures), a front portion 3 of the housing 1 which is rigidly fixed to bottom portion 2. The housing 1 further comprises, a back portion 5 and a top portion 4. The top portion 4 is fixed to the front portion 3 by a movement supporting means 7 (not shown on the figure). A bent portion of the front portion 3 and a bent portion of the back portion 5 together create along a lateral edge 36 a side portion 6 of the housing 1. Inside the housing 1 a beverage producing unit (not shown on the figure) is placed. The back portion 5 is fixed to the bottom portion 2 by a fixing means 8 (partially visible on the figure). The movement supporting means 7 causes that the bottom portion 2 with rigidly connected the front portion 3 and the top potion 4 with rigidly connected the back portion 5 are pivotally connected. Therefore the top portion 4 together with rigidly connected the back portion 5 with respect to the rigidly connected bottom portion 2 and the front portion 3 can be moved between the preassembled and the assembled position. Said movement is realized by rotating the top portion 4 with rigidly connected the back portion 5 with respect to the front portion 3 by a rotational axis 45. A persistent connection of said pivotally connected portions in assembled position is provided by the fixing means 8.

Fig. 2 shows perspective view of the top portion 4. The top portion 4 closes the housing 1 from the top side. The top portion 4 is disposed with downwardly extending two protrusions 44. Said protrusions 44 are placed symmetrically on a side of the top portion 4. Each of said protrusion 44 comprises an elongated sliding element 41. Said sliding elements 41 extends from the protrusions 44, outside of the top portion 4 and along a longitudinal axis of the top portion 4. The top portion 4 comprises a groove 42 arranged between said protrusions 44, perpendicularly to the longitudinal axis of the top portion 4. The groove 42 is indented to receive a paddle 33 (not shown on the figure) extending from the front portion 3, after fixing the top portion 4 to the front portion 3 by the movement supporting means 7. The paddle 33 can slide in the groove 42 during the pivotal movement the top portion 4 with respect the front portion 3 of the housing 1. Therefore the groove 42 with the paddle 33 protect the top portion 4 from unexpected movement along the longitudinal axis of the top portion 4 with respect to the front portion 3. The top portion 4 comprises also a bottom edge 43 which stays in the contact with an upper edge 34 of the front portion 3 (not shown on the figure) during the pivotal motion of said portions.

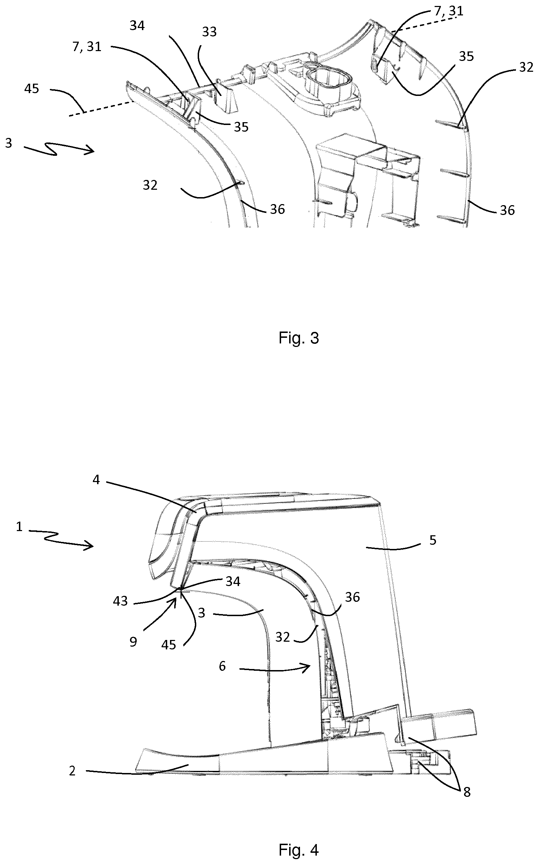

Fig. 3 shows perspective view of the upper inner side of the front portion 3. The inner side of the front portion 3 is disposed with series elements for fixing the beverage producing unit (not shown on the figure) inside the housing 1. The front portion 3 comprises also two supporting elements 35 with elongated slot 31, which are symmetrically disposed on the internal upper portion of the front portion 3. Side portion of the front portion 3 is bent and together with bent portion of the back portion 5 (not shown on the figure) create a side portion of the housing 1. The side portion of the front portion 3 are provided with series of ribs 32. Said ribs 32 are placed along the lateral edge 36 for guiding connected portion, namely the back portion 5, supporting rigidity of the housing 1 after assembling. The inner side of the front portion 3 is disposed with the paddle 33 arranged between said supporting elements 35, perpendicularly to the upper edge 34. The paddle 33 extends from the front portion 3 and is intended to enter the groove 42 (not shown on the figure) after connecting the top portion 4 to the front portion 3 by the movement supporting means 7. The paddle 33 can slide in the groove 42 during the pivotal movement the top portion 4 with respect the front portion 3 of the housing 1. Therefore the groove 42 with the paddle 33 protect the top portion 4 from unexpected movement along the longitudinal axis of the top portion 4 with respect to the front portion 3. The ratio between length of the slot 31 and length of the sliding element 41 is 1.5, and the gap between the slot 31 and the sliding element 41 is 0.1 mm.

Fig. 4 shows a side view of the housing 1 in preassembled position. The housing 1 comprises the bottom portion 2 and the front portion 3 fixed to this, adapted for accommodating space for a coffee pot. Further the housing 1 comprises the top portion 4, the back portion 5, and the side portion 6. The side portion 6 is formed by connecting bent portions of the front portion 3 and/or bent portion of the back portion 5. Inside the housing 1 is placed a beverage producing unit (not shown on the figure). In the preassembled position the back portion 5 and the top portion 4 are inclined with respect to the front portion 3 and the bottom portion 2. Said inclination is possible because the front portion 3 and the top portion 4 are connected by movement supporting means 7 (not shown on the figure). The side portion of the front portion 3 are provided with series of ribs 32. Said ribs 32 are placed along the lateral edge 36 for guiding the back portion 5 during the assembling and supporting rigidity of the housing 1 after assembling. During said pivotal movement, at least part of the upper edge 34 and at least part of the bottom edge 43 are in constant contact with each other and create the rotation area 9 as a additional fulcrum for supporting said pivotal movement. After installing all internal components and appropriate sealing (not shown on the figure) the back portion 5 is pressed toward the front portion 3, therefore the position is changed from the preassembled to the assembled. The assembled position is maintained by the fixing means 8. The fixing means 8 is partially placed on the bottom portion 2 and on the second end of the back portion 5. This fixing means 8 creates permanent connection between said portions of the housing 1.

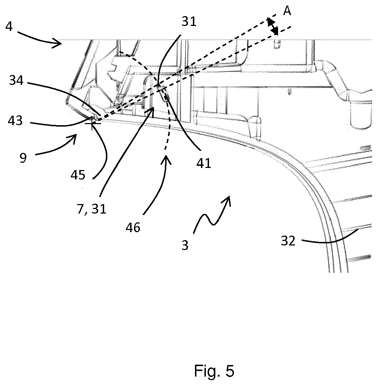

Fig. 5 shows cross-section through the upper portion the housing 1. The top portion 4 is in the assembled position. In the preassembled position the sliding element 41 is in the contact with the lower end of the slot 31. The sliding element 41 and the slot 31 are in the shape of concentric circular arcs or approximately concentric circular arcs. The ratio between length of the slot 31 and length of the sliding element 41 is 1.5, and the gap between the slot 31 and the sliding element 41 is 0.1 mm. This geometry of the sliding element 41 and the slot 31 provides possibility of pivotal movement along a arc of rotation 46 by the rotation axis 45. Said rotation axis 45 is on or near to the rotation area 9. The sliding element 41 is guided by the slot 31 and can be moved between the lower and the upper end of the slot 31 in range of an angle A. The value of the angle is about 4 degrees. The housing 1 comprises two pairs of sliding elements 41 and the slots 31 placed on the side of the upper portion of the housing 1, along the rotational axis 45. The side portion of the front portion 3 are provided with series of ribs 32. Said ribs 32 are placed along the lateral edge 36 (not shown on the figure) for guiding the back portion 5 (not shown on the figure) during the assembling and supporting rigidity of the housing 1 after assembling. During the pivotal movement by the rotational axis 45, at least part of the upper edge 34 and at least part of the bottom edge 43 are in constant contact with each other and create the rotation area 9 as an additional fulcrum for supporting said pivotal movement along the arc of rotation 46. The fixing means 8 is partially placed on the bottom portion 2 (not shown on the figure) and on the second end of the back portion 5 (not shown on the figure). Said fixing means 8 creates permanent connection between said portions of the housing 1 and prevents the back portion 5 of the housing 1 from opening.

The present invention provides the beverage making device and method of assembling it with a simple and cheap manner. Portions of the housing can be produced in easy and fast way during injection molding process. Pivotally connection of two adjacent portions of the housing increases the inner space for inserting internal components to the housing. Additionally the housing is assembled without screws or with very limited application of screws, therefore assembly of the device is easier and faster.

### List of reference signs

- 1: housing
- 2: bottom portion
- 3: front portion
- 4: top portion
- 5: back portion
- 6: side portion
- 7: movement supporting means
- 8: fixing means
- 9: rotation area
- 31: slot
- 32: rib
- 33: paddle
- 34: upper edge
- 35: supporting element
- 36: lateral edge
- 41: sliding element
- 42: groove
- 43: bottom edge
- 44: protrusion
- 45: rotation axis
- 46: arc of rotation

## Claims

1. Beverage making device, comprising a housing (1) having:
a bottom portion (2) and a front portion (3) fixed to this bottom portion (2), adapted for accommodating space for a coffee pot,
a top portion (4) and a back portion (5) which are rigidly connected each other, side portions (6) of the housing (1),
and a beverage producing unit in the said housing (1) **characterized in that** the front portion (3) has a pair of supporting elements (35) on the horizontal portion of it, provided with slots (31), and the top portion (4) is disposed with a pair of protrusions (44),
extending downwardly, provided with sliding elements (41), wherein after mounting the top portion (4) to the front portion (3), sliding elements (41) slide along slots (31), and
the said slot (31) with the said sliding element (41) form a movement supporting means (7) for supporting movement of the top portion (4) with respect to the front portion (3) about a rotation axis (45), wherein the movement supporting means (7) is placed outside the rotation axis (45) of the said pivot motion.

2. Beverage making device according to claim 1, **characterized in that** the movement of the top portion (4) with respect to the front portion (3) is limited by the movement supporting means (7) to a preassembled position or an assembled position.

3. Beverage making device according to claim 1 or 2, **characterized in that** the slot (31) and the sliding element (41) present the shape of concentric circular arcs or approximately concentric circular arcs.

4. Beverage making device according to claim 1 or 2 or 3, **characterized in that** the slot (31) is longer than the sliding element (41).

5. Beverage making device according to any of preceding claim **characterized in that,** the ratio between the length of the slot (31) and the length of the sliding element (41) is about 1.5, wherein the gap between the slot (31) and the sliding element (41) is between 0.1 to 0.5mm.

6. Beverage making device according to any of preceding claim **characterized in that,** an edge (43) of the top portion (4) and an edge (34) of the front portion (3) which are at least partially in contact, create a supporting area (9), supporting mutual movement of the top portion (4) with respect to the front portion (3)

7. Beverage making device according to any of preceding claim **characterized in that,** the top portion (4) is pivotally attached to the front portion (3) by two pairs of the slots (31) and the sliding elements (41) for a movement between the preassembled and the assembled position.

8. Beverage making device according to any of preceding claim **characterized in that,** the front portion (3) comprises a paddle (33) and the top portion (4) comprises a groove (42) and the paddle (33) and the groove (42) are disposed near to the rotation area (9).

9. Beverage making device according to any of preceding claim **characterized in that,** the front portion (3) comprises a series of ribs (32) disposed along a lateral edge (36) of the front portion (3) and cooperate correspondingly with the back portion (5).

10. Beverage making device according to any of preceding claim **characterized in that,** the movement supporting means (7) maintain the top portion (4) with respect to the front portion (3) in fixed mutual position.

11. Beverage making device according to any of preceding claim **characterized in that,** the bottom portion (2), and the back portion (5) are fixed together by a fixing means (8) disposed on a second end of the back portion (5) with respect to the rotation area (9).

12. A method for assembling beverage making device of claim 1 comprising: connecting the front portion (3) to the bottom portion (2), placing the beverage producing unit on the inner side of the bottom portion (2) and the front portion (3), fixing the top portion (4) to the front portion (3) by using movement supporting means (7) into preassembled position, mounting the back portion (5) to the top portion (4), placing a sealing, compressing the back portion (4) with the top portion (3) by pivotally moving it by the movement supporting means (7), fixing the back portion (3) to the bottom portion (2) by using the fixing means (8).

## Patentansprüche

1. Getränkezubereitungsvorrichtung, die ein Gehäuse (1) mit Folgendem umfasst:
einem unteren Abschnitt (2) und einem vorderen Abschnitt (3), der an diesem unteren Abschnitt (2) fixiert und so ausgelegt ist, dass er eine Kaffeetasse aufnehmen kann,
einem oberen Abschnitt (4) und einem hinteren Abschnitt (5), die fest miteinander verbunden sind,
Seitenabschnitten (6) des Gehäuses (1),
und einer Getränkebereitungseinheit in dem Gehäuse (1), **dadurch gekennzeichnet,**
**dass** der vordere Abschnitt (3) an seinem horizontalen Abschnitt zwei Halteelemente (35) aufweist, die mit Schlitzen (31) versehen sind, und an dem oberen Abschnitt (4) zwei nach unten verlaufende Vorsprünge (44) mit Gleitelementen (41) angeordnet sind, wobei die Gleitelemente (41) nach dem Anbringen des oberen Abschnitts (4) am vorderen Abschnitt (3) an den Schlitzen (31) entlanggleiten und der Schlitz (31) mit dem Gleitelement (41) ein Bewegungshilfsmittel (7) bildet, das die Bewegung des oberen Abschnitts (4) in Bezug auf den vorderen Abschnitt (3) um eine Drehachse (45) unterstützt, wobei das Bewegungshilfsmittel (7) nicht auf der Drehachse (45) der Schwenkbewegung angeordnet ist.

2. Getränkezubereitungsvorrichtung nach Anspruch 1, **dadurch gekennzeichnet, dass** die Bewegung des oberen Abschnitts (4) in Bezug auf den vorderen Abschnitt (3) durch das Bewegungshilfsmittel (7) auf eine vormontierte oder eine montierte Position eingeschränkt ist.

3. Getränkezubereitungsvorrichtung nach Anspruch 1 oder 2, **dadurch gekennzeichnet, dass** der Schlitz (31) und das Gleitelement (41) die Form von konzentrischen Kreisbögen oder in etwa konzentrischen Kreisbögen aufweisen.

4. Getränkezubereitungsvorrichtung nach Anspruch 1 oder 2 oder 3, **dadurch gekennzeichnet, dass** der Schlitz (31) länger ist als das Gleitelement (41).

5. Getränkezubereitungsvorrichtung nach einem der vorhergehenden Ansprüche, **dadurch gekennzeichnet, dass** das Verhältnis zwischen der Länge des Schlitzes (31) und der Länge des Gleitelements (41) etwa 1,5 beträgt, wobei der Spalt zwischen dem Schlitz (31) und dem Gleitelement (41) 0,1 bis 0,5 mm beträgt.

6. Getränkezubereitungsvorrichtung nach einem der vorhergehenden Ansprüche, **dadurch gekennzeichnet, dass** eine Kante (43) des oberen Abschnitts (4) und eine Kante (34) des vorderen Abschnitts (3), die sich zumindest teilweise berühren, einen Haltebereich (9) bilden, der eine Bewegung des oberen Abschnitts (4) in Bezug auf den vorderen Abschnitt (3) unterstützt.

7. Getränkezubereitungsvorrichtung nach einem der vorhergehenden Ansprüche, **dadurch gekennzeichnet, dass** der obere Abschnitt (4) zur Bewegung zwischen der vormontierten und der montierten Position über zwei Paar Schlitze (31) und Gleitelemente (41) schwenkbar an dem vorderen Abschnitt (3) befestigt ist.

8. Getränkezubereitungsvorrichtung nach einem der vorhergehenden Ansprüche, **dadurch gekennzeichnet, dass** der vordere Abschnitt (3) einen Löffel (33) und der obere Abschnitt (4) eine Nut (42) umfasst und der Löffel (33) und die Nut (42) in der Nähe des Drehbereichs (9) angeordnet sind.

9. Getränkezubereitungsvorrichtung nach einem der vorhergehenden Ansprüche, **dadurch gekennzeichnet, dass** der vordere Abschnitt (3) eine Reihe Rippen (32) umfasst, die an einer seitlichen Kante (36) des vorderen Abschnitts (3) angeordnet sind und entsprechend mit dem hinteren Abschnitt (5) zusammenwirken.

10. Getränkezubereitungsvorrichtung nach einem der vorhergehenden Ansprüche, **dadurch gekennzeichnet, dass** das Bewegungshilfsmittel (7) den oberen Abschnitt (4) in Bezug auf den vorderen Abschnitt (3) in einer festen Position hält.

11. Getränkezubereitungsvorrichtung nach einem der vorhergehenden Ansprüche, **dadurch gekennzeichnet, dass** der untere Abschnitt (2) und der hintere Abschnitt (5) über ein Fixiermittel (8) aneinander fixiert sind, das in Bezug auf den Drehbereich (9) an einem zweiten Ende des hinteren Abschnitts (5) angeordnet ist.

12. Verfahren zum Montieren einer Getränkezubereitungsvorrichtung nach Anspruch 1, das Folgendes umfasst: Verbinden des vorderen Abschnitts (3) mit dem unteren Abschnitt (2), Anordnen der Getränkebereitungseinheit auf der Innenseite des unteren Abschnitts (2) und des vorderen Abschnitts (3), Fixieren des oberen Abschnitts (4) in vormontierter Position an dem vorderen Abschnitt (3) mithilfe eines Bewegungshilfsmittels (7), Anbringen des hinteren Abschnitts (5) am oberen Abschnitt (4), Anordnen einer Dichtung, Andrücken des hinteren Abschnitts (4) an den vorderen Abschnitt (3) durch Schwenken mithilfe des Bewegungshilfsmittels (7), Fixieren des hinteren Abschnitts (3) an dem unteren Abschnitt (2) mithilfe des Fixiermittels (8).

## Revendications

1. Dispositif de fabrication de boissons, comprenant un logement (1) qui comporte :
une partie de fond (2) et une partie avant (3) qui est fixée sur cette partie de fond (2), lesquelles parties sont adaptées pour loger un espace pour un pot à café ;
une partie de sommet (4) et une partie arrière (5) qui sont connectées de façon rigide l'une à l'autre, et des parties latérales (6) du logement (1) ; et
une unité de production de boissons dans ledit logement (1), **caractérisé en ce que** la partie avant (3) comporte une paire d'éléments de support (35) sur sa partie horizontale, lesquels éléments de support sont munis de fentes (31), et la partie de sommet (4) est disposée de telle sorte qu'elle comporte une paire de protubérances (44) qui sont étendues vers le bas et qui sont munies d'éléments coulissants (41), dans lequel, après le montage de la partie de sommet (4) sur la partie avant (3), les éléments coulissants (41) coulissent le long des fentes (31), et ladite fente (31), avec ledit élément coulissant (41), forme un moyen de support de déplacement (7) pour supporter le déplacement de la partie de sommet (4) par rapport à la partie avant (3) autour d'un axe de rotation (45), dans lequel le moyen de support de déplacement (7) est placé à l'extérieur de l'axe de rotation (45) dudit déplacement pivotant.

2. Dispositif de fabrication de boissons selon la revendication 1, **caractérisé en ce que** le déplacement de la partie de sommet (4) par rapport à la partie avant (3) est limité par le moyen de support de déplacement (7) à une position préassemblée ou à une position assemblée.

3. Dispositif de fabrication de boissons selon la revendication 1 ou 2, **caractérisé en ce que** la fente (31) et l'élément coulissant (41) présentent la forme d'arcs circulaires concentriques ou d'arcs approximativement circulaires concentriques.

4. Dispositif de fabrication de boissons selon la revendication 1 ou 2 ou 3, **caractérisé en ce que** la fente (31) est plus longue que l'élément coulissant (41).

5. Dispositif de fabrication de boissons selon l'une quelconque des revendications précédentes, **caractérisé en ce que** le rapport entre la longueur de la fente (31) et la longueur de l'élément coulissant (41) est d'environ 1,5, et dans lequel l'espace entre la fente (31) et l'élément coulissant (41) se situe entre 0,1 et 0,5 mm.

6. Dispositif de fabrication de boissons selon l'une quelconque des revendications précédentes, **caractérisé en ce qu'**un bord (43) de la partie de sommet (4) et un bord (34) de la partie avant (3) qui sont au moins partiellement en contact créent une zone de support (9), laquelle supporte un déplacement mutuel de la partie de sommet (4) par rapport à la partie avant (3).

7. Dispositif de fabrication de boissons selon l'une quelconque des revendications précédentes, **caractérisé en ce que** la partie de sommet (4) est liée de façon pivotante à la partie avant (3) par deux paires des fentes (31) et des éléments coulissants (41) pour un déplacement entre la position préassemblée et la position assemblée.

8. Dispositif de fabrication de boissons selon l'une quelconque des revendications précédentes, **caractérisé en ce que** la partie avant (3) comprend une languette (33) et la partie de sommet (4) comprend une gorge (42), et la languette (33) et la gorge (42) sont disposées à proximité de la zone de rotation (9).

9. Dispositif de fabrication de boissons selon l'une quelconque des revendications précédentes, **caractérisé en ce que** la partie avant (3) comprend une série de nervures (32) qui sont disposées le long d'un bord latéral (36) de la partie avant (3) et qui coopèrent d'une façon par correspondance avec la partie arrière (5).

10. Dispositif de fabrication de boissons selon l'une quelconque des revendications précédentes, **caractérisé en ce que** le moyen de support de déplacement (7) maintient la partie de sommet (4) par rapport à la partie avant (3) selon une position mutuelle fixe.

11. Dispositif de fabrication de boissons selon l'une quelconque des revendications précédentes, **caractérisé en ce que** la partie de fond (2) et la partie arrière (5) sont fixées ensemble par un moyen de fixation (8) qui est disposé sur une seconde extrémité de la partie arrière (5) par rapport à la zone de rotation (9).

12. Procédé pour assembler un dispositif de fabrication de boissons selon la revendication 1, comprenant : la connexion de la partie avant (3) sur la partie de fond (2), le positionnement de l'unité de production de boissons sur le côté interne de la partie de fond (2) et de la partie avant (3), la fixation de la partie de sommet (4) sur la partie avant (3) en utilisant le moyen de support de déplacement (7) selon une position préassemblée, le montage de la partie arrière (5) sur la partie de sommet (4), le positionnement d'une étanchéité, qui comprime la partie arrière (4) avec la partie de sommet (3), en la déplaçant par pivotement au moyen du moyen de support de déplacement (7), et la fixation de la partie arrière (3) sur la partie de fond (2) en utilisant le moyen de fixation (8).
